# EUROPEAN PATENT APPLICATION

(11) **EP 4 811 460 A1**
(43) Date of publication of application: **23.09.2026**
(21) Application number: 24899229.9
(22) Date of filing: 08.07.2024
(51) Int. Cl.: H01M 4/62

(54) **SECONDARY BATTERY AND ELECTRIC DEVICE COMPRISING SAME**

(30) Priority: 07.12.2023 CN 202311678957
(71) Applicant: Contemporary Amperex Technology Co., Limited, Ningde, Fujian 352100 (CN)
(72) Inventor: PENG, Bin, Ningde, Fujian 352100 (CN); HE, Libing, Ningde, Fujian 352100 (CN); MA, Jianjun, Ningde, Fujian 352100 (CN); CHEN, Meiwan, Ningde, Fujian 352100 (CN)
(74) Representative: Ziebig Hengelhaupt Intellectual Property Attorneys Patentanwaltskanzlei PartGmbB
(86) International application number: PCT/CN2024/104235
(87) International publication number: WO 2025/118578

(57) **Abstract**

The present invention provides a negative electrode sheet, a secondary battery, and an electric device comprising same. The negative electrode sheet comprises a negative electrode current collector and a negative electrode film layer formed on at least one surface of the negative electrode current collector; the negative electrode film layer has a first surface distant from the negative electrode current collector and a second surface opposite to the first surface; the thickness of the negative electrode film layer is denoted as H; a region within the thickness range from the first surface to 0.3H of the negative electrode film layer is denoted as a first region of the negative electrode film layer; a region within the thickness range from the second surface to 0.3H of the negative electrode film layer is denoted as a second region of the negative electrode film layer; and the content of a binder of the first region is less than the content of a binder of the second region. The secondary battery prepared from the negative electrode sheet has good cycle performance and dynamic performance.

## Description

### CROSS-REFERENCE TO RELATED APPLICATIONS

The present disclosure claims priority to Chinese Patent Application No. 202311678957.7, filed on December 7, 2023 and entitled "SECONDARY BATTERY AND POWER CONSUMING APPARATUS INCLUDING SAME", which is incorporated herein by reference in its entirety.

### TECHNICAL FIELD

The present disclosure relates to the technical field of secondary batteries, and in particular, to a secondary battery and a power consuming apparatus including the same.

### BACKGROUND

In recent years, as secondary batteries are widely used in energy storage power supply systems such as water power stations, thermal power stations, wind power stations, and solar power stations, and in multiple fields such as electric tools, electric bicycles, electric motorcycles, electric vehicles, military equipment, and aerospace, the market has higher requirements on fast charging performance, cycle life and the like of batteries.

Compared to power batteries, energy storage batteries have a longer cycle life. Improving the energy density of secondary batteries can help to improve their cycle life, but it may reduce the migration performance of active ions, affect the kinetic performance of secondary batteries, and make it difficult for secondary batteries to balance the cycle life and the kinetic performance, which is not conducive to the use of energy storage secondary batteries.

### SUMMARY

The present disclosure provides a secondary battery and a power consuming apparatus including the same. The secondary battery has good cycling performance and kinetic performance simultaneously.

A negative electrode plate provided according to a first aspect of the present disclosure includes a negative electrode current collector and a negative electrode film layer formed on at least one surface of the negative electrode current collector. The negative electrode film layer has a first surface distant from the negative electrode current collector and a second surface arranged opposite to the first surface. The thickness of the negative electrode film layer is denoted as H. A region within a thickness range from the first surface to 0.3 H of the negative electrode film layer is denoted as a first region of the negative electrode film layer. A region within a thickness range from the second surface to 0.3 H of the negative electrode film layer is denoted as a second region of the negative electrode film layer. The binder content in the first region is less than the binder content in the second region, thus helping to adjust the pore structures of the upper and lower layers of the negative electrode film layer, improve the kinetic difference between the upper and lower layers of the negative electrode film layer, and endow the negative electrode plate with excellent kinetic performance, and enable the secondary battery to have good fast charging performance.

In any of embodiments, the first region includes a first binder. The mass content of the first binder in the first region is 0.78% to 2.0%, optionally 0.78% to 1.4%, thus achieving good cohesive force and pore structures between the particles of the first carbon-based material, and improving the electrical contact between the first carbon-based materials and the migration performance of active ions in the first region.

In any of embodiments, the second region includes a second binder. The mass content of the second binder in the second region is 1.0% to 3.0%, optionally 1.79% to 2.32%. During the preparation of the negative electrode plate, the binder in the second region migrates toward the first region as the solvent evaporates, thus helping to reduce the difference in binder content between the first region and the second region of the negative electrode film layer. Compared to a negative electrode plate with a uniform binder mass content throughout the negative electrode film layer, the negative electrode plate provided in the present disclosure helps to alleviate the pore structure blockage in the first region and improve the kinetic performance of the negative electrode plate. Simultaneously, it can also improve the electrical contact between the negative electrode film layer and the negative electrode current collector, mitigate the deterioration of electrical contact caused by film layer detachment or fracture due to insufficient binder content in the second region, and enable the secondary battery to have good cycling performance and kinetic performance simultaneously.

In any of embodiments, the cohesive force of the first region is greater than or equal to 70 N/m and less than or equal to 125 N/m, optionally 70 N/m to 110 N/m, thus further improving the pore structures of the first region and improving the kinetic performance.

In any of embodiments, the cohesive force of the second region is greater than or equal to 138 N/m and less than or equal to 170 N/m, optionally 145 N/m to 170 N/m, thus further improving the degree of overlap between the particles of a negative electrode active material and improving the electrical contact between the particles; simultaneously suppressing the volume change of the negative electrode film layer, reducing the detachment of the negative electrode active material, and further improving the cycling performance of the secondary battery.

In any of embodiments, the first region includes a first carbon-based material, the second region includes a second carbon-based material, and the first carbon-based material and the second carbon-based material are the same carbon-based material. In this case, the first carbon-based material or the second carbon-based material satisfies at least one of the following conditions:
(1) the volume-based particle size Dv10 of the first carbon-based material or the second carbon-based material is greater than or equal to 4 µm, optionally 4 µm to 7 µm;
(2) the volume-based particle size Dv50 of the first carbon-based material or the second carbon-based material is 7 µm to 18 µm, optionally 8.0 µm to 16.0 µm;
(3) the volume-based particle size Dv90 of the first carbon-based material or the second carbon-based material is less than or equal to 40.0 µm, optionally 15 µm to 30.0 µm;
(4) the particle size distribution (Dv90-Dv10)/Dv50 of the first carbon-based material or the second carbon-based material is 0.9 to 1.6, optionally 1.10 to 1.55;
(5) the gravimetric capacity of the first carbon-based material or the second carbon-based material is 310 mAh/g to 350 mAh/g; and
(6) the first carbon-based material and the second carbon-based material both include artificial graphite.

The first carbon-based material and the second carbon-based material have a good volume-based particle size Dv50, thus helping to increase the specific surface area of the negative electrode active material, provide sufficient active sites, shorten the migration path of active ions, and improve the cycling performance and kinetic performance of the secondary battery. A suitable volume-based particle size Dv10 helps to reduce the side reactions of the negative electrode active material during cycling, mitigate the irreversible consumption of active ions caused by the side reactions, and improve the cycling performance of the secondary battery. A suitable volume-based particle size Dv90 can reduce the loss of the electrical contact of the negative electrode active material with a large particle size due to particle breakage during cycling, thus enabling the secondary battery to have good cycling performance and kinetic performance simultaneously. The gravimetric capacity of the first carbon-based material and the second carbon-based material being within the specified range helps with the transport of active ions in the first region, thus improving the kinetic performance of the secondary battery, helping to increase the overall energy density of the negative electrode plate, and simultaneously improving the cycling performance and kinetic performance of the secondary battery.

In any of embodiments, the first region includes a first carbon-based material. The second region includes a second carbon-based material. The first carbon-based material and the second carbon-based material are different carbon-based materials. In this case, the first carbon-based material satisfies at least one of the following conditions:
(1) the volume-based particle size Dv10 of the first carbon-based material is greater than or equal to 3 µm, optionally 3 µm to 7 µm;
(2) the volume-based particle size Dv50 of the first carbon-based material is 5.5 µm to 13.5 µm, optionally 7.5 µm to 11.5 µm;
(3) the volume-based particle size Dv90 of the first carbon-based material is less than or equal to 30 µm, optionally 15 µm to 25 µm;
(4) the particle size distribution (Dv90-Dv10)/Dv50 of the first carbon-based material is 0.9 to 1.6, optionally 1.10 to 1.55;
(5) the gravimetric capacity of the first carbon-based material is 315 mAh/g to 335 mAh/g; and
(6) the first carbon-based material includes artificial graphite;

the second carbon-based material satisfies at least one of the following conditions:
(1) the volume-based particle size Dv10 of the second carbon-based material is greater than or equal to 3.5 µm, optionally 3.5 µm to 7 µm;
(2) the volume-based particle size Dv50 of the second carbon-based material is 7.0 µm to 14.0 µm, optionally 8.0 µm to 12.0 µm;
(3) the volume-based particle size Dv90 of the second carbon-based material is less than or equal to 28 µm, optionally 13 µm to 20 µm;
(4) the particle size distribution (Dv90-Dv10)/Dv50 of the second carbon-based material is 0.9 to 1.5, optionally 1.1 to 1.3;
(5) the gravimetric capacity of the second carbon-based material is 345 mAh/g to 355 mAh/g; and
(6) the second carbon-based material includes artificial graphite.

The volume-based particle sizes Dv50, Dv10, and Dv90 of the first carbon-based material and the second carbon-based material that serve as negative electrode active materials being within the specified ranges helps to provide sufficient active sites for active ions and shorten the migration path of active ions, mitigate the irreversible consumption of the active ions caused by the side reactions, reduce the loss of the electrical contact of the negative electrode active material with a large particle size due to particle breakage during cycling, and enable the secondary battery to have good cycling performance and kinetic performance simultaneously. In addition, the gravimetric capacity of the first carbon-based material being within the specified range helps with the transport of active ions in the first region, thus improving the kinetic performance of the secondary battery. The gravimetric capacity of the second carbon-based material being within the specified range helps to improve the overall energy density of the negative electrode plate, and simultaneously improve the cycling performance and kinetic performance of the secondary battery.

In any of embodiments, under the condition that the first carbon-based material and the second carbon-based material are different carbon-based materials, the volume-based particle size Dv50 of the first carbon-based material is less than the volume-based particle size Dv50 of the second carbon-based material, thus making the porosity of the first region of the negative electrode film layer greater than or equal to the porosity of the second region, making the pore structures between the particles of the first carbon-based material less likely to be blocked, and helping to maintain good kinetic performance of the secondary battery during long-term cycling.

In any of embodiments, under the condition that the first carbon-based material and the second carbon-based material are different carbon-based materials, the gravimetric capacity of the first carbon-based material is less than or equal to the gravimetric capacity of the second carbon-based material. In this case, the powder compaction density of the first carbon-based material is less than or equal to the powder compaction density of the second carbon-based material, and the first region has a higher porosity than the second region. At the same time, the second region has a higher energy density than the first region, thus enabling the negative electrode plate to balance the energy density and the transport performance of the active ions.

In any of embodiments, the first binder and the second binder respectively include at least one of styrene-butadiene rubber, polyacrylic acid, sodium polyacrylate, polyacrylamide, polyvinyl alcohol, sodium alginate, polymethacrylic acid, and carboxymethyl chitosan.

In any of embodiments, the compaction density of the negative electrode film layer is 1.30 g/cm³ to 1.60 g/cm³; and/or the areal density of the negative electrode film layer is 7 mg/cm² to 15mg/cm², thus helping to improve the energy density of the secondary battery.

A second aspect of the present disclosure provides a power consuming apparatus, which includes the secondary battery according to the first aspect of the present disclosure.

### BRIEF DESCRIPTION OF THE DRAWINGS

FIG. 1 is a schematic diagram of a negative electrode plate according to an embodiment of the present disclosure;
FIG. 2 is a schematic diagram of a negative electrode plate according to an embodiment of the present disclosure;
FIG. 3 is a schematic diagram of a negative electrode plate according to an embodiment of the present disclosure;
FIG. 4 is a schematic diagram of a secondary battery according to an embodiment of the present disclosure;
FIG. 5 is an exploded view of the secondary battery according to the embodiment of the present disclosure as shown in FIG. 4;
FIG. 6 is a schematic diagram of a battery module according to an embodiment of the present disclosure;
FIG. 7 is a schematic diagram of a battery pack according to an embodiment of the present disclosure;
FIG. 8 is an exploded view of the battery pack according to an embodiment of the present disclosure as shown in FIG. 7; and
FIG. 9 is a schematic diagram of a power consuming apparatus using a secondary battery as a power source according to an embodiment of the present disclosure.

Description of reference numerals:
1-battery pack; 2-upper box; 3-lower box; 4-battery module; 5-secondary battery; 51-case; 52-electrode assembly; 53-cover plate; 10-negative electrode plate; 101-negative electrode current collector; 102-negative electrode film layer; 102a-first surface; 102b-second surface; 1021-second region; 1022-first region; and 1023-middle region.

### DETAILED DESCRIPTION

Embodiments of a positive electrode active material and a method for preparing the same, a positive electrode plate, a secondary battery, a battery module, a battery pack, and a power consuming apparatus of the present disclosure will be specifically disclosed in detail below appropriately with reference to the detailed descriptions of the drawings. However, there may be situations where unnecessary detailed descriptions are omitted. For example, there may be situations where detailed descriptions of well-known matters and repeated descriptions of actually the same structure are omitted, for the purpose of preventing the following descriptions from becoming unnecessarily lengthy, and helping to understand by those skilled in the art. In addition, the drawings and subsequent descriptions are provided for those skilled in the art to fully understand the present disclosure and are not intended to limit the subject matters defined in the claims.

Any "range" disclosed in the present disclosure is defined by a lower limit and an upper limit. A given range is defined by selecting a lower limit and an upper limit. The selected lower limit and upper limit define boundaries of the particular range. The range defined in this way may include or exclude end values, and may be arbitrarily combined, that is, any lower limit may be combined with any upper limit to form a new range. For example, if ranges 60 to 120 and 80 to 110 are listed for a particular parameter, it is to be understood that ranges of 60 to 110 and 80 to 120 are also expectable. Additionally, if the minimum range values 1 and 2 and the maximum range values 3, 4 and 5 are listed, the following ranges are all expectable: 1 to 3, 1 to 4, 1 to 5, 2 to 3, 2 to 4, and 2 to 5. In the present disclosure, unless otherwise stated, the numerical range "from a to b" represents an abbreviated representation of any combination of real numbers between a and b, where both a and b are real numbers. For example, the numerical range "0 to 5" means that all real numbers between 0 and 5 are listed herein, and "0 to 5" is merely an abbreviated representation of the combination of these numbers. In addition, when a parameter is expressed as an integer ≥2, it is equivalent to disclosing that the parameter is, for example, and integer such as 2, 3, 4, 5, 6, 7, 8, 9, 10, 11, 12, or the like.

Unless otherwise specified, all the embodiments and optional embodiments of the present disclosure may be combined with each other to form new technical solutions.

Unless otherwise specified, all technical features and optional technical features of the present disclosure may be combined with each other to form new technical solutions.

Unless otherwise specified, all steps in the present disclosure may be performed sequentially or randomly, and preferably, sequentially. For example, "the method including steps (a) and (b)" represents that the method may include steps (a) and (b) performed sequentially, or may include steps (b) and (a) performed sequentially. For example, "the method may further include step (c)" represents that step (c) may be added to the method in any order. For example, the method may include steps (a), (b) and (c), or steps (a), (c) and (b), or steps (c), (a) and (b), or the like.

Unless otherwise specified, the terms such as "include", "comprise", and their variants mentioned in the present disclosure may be open-ended or closed-ended. For example, the terms "comprise" and "include" may indicate that other components not listed may further be comprised or included, or only listed components may be comprised or included.

Unless otherwise specified, the term "or" is inclusive in the present disclosure. For example, the phrase "A or B" represents "A, B, or both A and B". More specifically, any one of the following conditions satisfies the condition "A or B": A is true (or present) and B is false (or not present); A is false (or not present) and B is true (or present); or both A and B are true (or present).

Generally, the secondary battery includes a positive electrode plate, a negative electrode plate, an electrolyte, and a separator. During charging and discharging of the battery, active ions (lithium ions or sodium ions) are intercalated and deintercalated back and forth between the positive electrode plate and the negative electrode plate. The electrolyte plays a role in conducting ions between the positive electrode plate and the negative electrode plate. The separator is arranged between the positive electrode plate and the negative electrode plate to mainly play a role in preventing a short circuit between a positive electrode and a negative electrode while allowing ions to pass through.

In the secondary battery, the negative electrode plate includes a negative electrode current collector and a negative electrode film layer formed on at least one surface of the negative electrode current collector. The negative electrode film layer includes a binder dispersed around the negative electrode active material, so as to provide binding performance between the particles of the negative electrode active material, suppress the volume expansion of the negative electrode film layer during cycling, and maintain the structural integrity of the negative electrode film layer. In the negative electrode film layer, there are pore structures between particles of the negative electrode active material, which are pores that are not completely filled by solid materials. In the preparation process of the secondary battery, the binder in the negative electrode film layer may migrate along the pore structure in the film layer towards a solvent evaporation direction (or away from the current collector) as the solvent evaporates, resulting in that the binder content in a film layer region of the negative electrode film layer away from the current collector is higher than the binder content in a film layer region on the surface of the current collector. Excessive binder may block the pore structures in the negative electrode film layer, affect the migration performance of the active ions, and thus affect the fast charging performance of the secondary battery.

### [Secondary battery]

In order to achieve a balance between the cycling performance and fast charging performance of the secondary battery, the secondary battery provided in the present disclosure includes a negative electrode plate. The negative electrode plate includes a negative electrode current collector and a negative electrode film layer formed on at least one surface of the negative electrode current collector. The negative electrode film layer has a first surface distant from the negative electrode current collector and a second surface arranged opposite to the first surface. The thickness of the negative electrode film layer (the thickness of the negative electrode film layer on a single side of the negative electrode current collector) is denoted as H. A region within a thickness range from the first surface to 0.3 H of the negative electrode film layer is denoted as a first region of the negative electrode film layer. A region within a thickness range from the second surface to 0.3 H of the negative electrode film layer is denoted as a second region of the negative electrode film layer. The binder content in the first region is less than the binder content in the second region, thus helping to adjust the pore structures of the upper and lower layers of the negative electrode film layer, alleviate the pore structure blockage in the first region, improve the kinetic difference between different regions of the negative electrode film layer, improve the kinetic performance of the negative electrode plate, and enable the secondary battery to have good fast charging performance.

As an example, the negative electrode current collector has two opposite surfaces in its own thickness direction, and the negative electrode film layer is arranged on either or both of the two opposite surfaces of the negative electrode current collector.

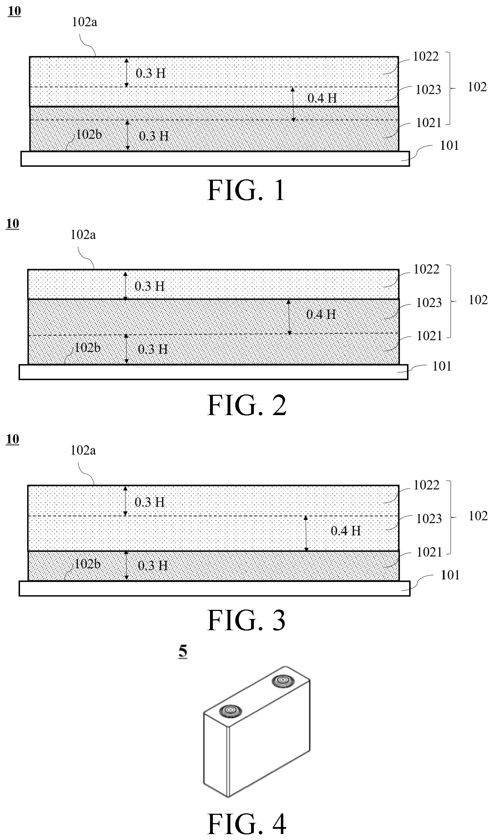

FIG. 1 to FIG. 3 show schematic diagrams of the negative electrode plate in the present disclosure. As shown in FIG. 1 to FIG. 3, the negative electrode plate 10 includes a negative electrode current collector 101 and a negative electrode film layer 102 formed on at least one surface of the negative electrode current collector 101. The negative electrode film layer 102 has a first surface 102a distant from the negative electrode current collector 101 and a second surface 102b arranged opposite to the first surface 102a. The thickness of the negative electrode film layer 102 is denoted as H. A region within a thickness range from the second surface 102b to 0.3 H of the negative electrode film layer is denoted as a second region 1021 of the negative electrode film layer. A region within a thickness range from the first surface 102a to 0.3 H of the negative electrode film layer is denoted as a first region 1022 of the negative electrode film layer.

In some embodiments, the first region includes a first binder. The second region includes a second binder.

In some embodiments, the mass content of the first binder in the first region is 0.78% to 2.0%, optionally 0.78% to 1.4%, 1.3% to 1.8%, 1.2% to 1.9%, or 1.1% to 1.7%. In some embodiments, the mass content of the first binder in the first region is 1.05%, 1.15%, 1.25%, 1.35%, 1.4%, 1.5%, 1.6%, 1.75%, 1.85%, 1.95%, or within a numerical range between any two thereof. Adjusting the mass content of the first binder in the first region can improve the degree of overlap between the particles of the first carbon-based material, improve the cohesive force and pore structures of the first region, and thus improve the electrical contact between the first carbon-based materials and the migration performance of the active ions in the first region.

In some embodiments, the mass content of the second binder in the second region is 1.0% to 3.0%, optionally 1.79% to 2.32%, 1.4% to 2.5%, 1.3% to 2.5%, 1.1% to 2.8%, or 1.2% to 2.9%. In some embodiments, the mass content of the second binder in the second region is 1.4%, 1.5%, 1.6%, 1.7%, 1.8%, 1.9%, 2.0%, 2.0%, 2.2%, 2.3%, 2.4%, 2.5%, 2.6%, 2.75%, 2.85%, 2.95%, or within a numerical range between any two thereof. This helps to reduce the difference in binder content between the first region and the second region of the negative electrode film layer. Compared to a negative electrode plate with a uniform binder mass content throughout the negative electrode film layer, the negative electrode plate provided in the present disclosure helps to alleviate the pore structure blockage in the first region and improve the kinetic performance of the negative electrode plate. Simultaneously, it also helps to improve the binding performance between the negative electrode film layer and the negative electrode current collector, mitigate the deterioration of electrical contact caused by film layer detachment or fracture due to insufficient binder content in the second region, mitigate the cycling performance decay caused by the deterioration of electrical contact, and enable the secondary battery to have good cycling performance and kinetic performance simultaneously.

In the secondary battery, the binder content in the first region and the second region may be determined by using a method known in the art. Exemplarily, the following method may be adopted for determination:

A clean copper foil is taken and laid flat on a desktop; a negative electrode plate to be tested is cut into 20 cm×10 cm plates; and powder samples are scraped from the first region and the second region of the negative electrode film layer using a clean blade.

Sampling standard: according to the thickness H of the negative electrode film layer, the thickness from the first surface to 0.3 H of the negative electrode film layer (this region is the first region) and the thickness from the second surface to 0.3 H of the negative electrode film layer (this region is the second region) are respectively calculated; powder is scraped from the first region and second region respectively as a first region sample and a second region sample, and the collected samples are respectively stored in sealed bottles.

50 mg of the first region sample and the second region sample collected are respectively weighted, placed in an alumina crucible and shaken flat. A thermogravimetric analyzer is used to detect the binder content in the sample (the atmosphere is a nitrogen atmosphere, and the nitrogen flow rate is 20 mL/min). The sample is heated from room temperature (25°C±5°C) to 600°C at a heating rate of 10°C/min. At this time, the mass percentage of the sample loss is regarded as the binder content in different regions.

Herein, the "pore structure" in the negative electrode plate may be observed by using a method known in the art, for example, directly observed through an electron microscopy image of the cross section of the film layer.

The first binder and the second binder each independently include at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the first binder is styrene-butadiene rubber. In some embodiments, the second binder is styrene-butadiene rubber.

The negative electrode film layer includes a first carbon-based material and a second carbon-based material as negative electrode active materials. The first region includes the first carbon-based material . The second region includes the second carbon-based material. The interactive force between the negative electrode active materials is cohesive force, which helps to maintain the mechanical stability of the negative electrode film layer and suppress the volume expansion of the negative electrode film layer, improve the electrical contact between active materials in the negative electrode film layer, and improve the conductivity of the negative electrode film layer. The cohesive force may also affect the pore structures between the material particles of the negative electrode film layer, affect the kinetic performance of the active ions in the negative electrode active material, and thus affect the fast charging performance of the secondary battery.

In some embodiments, the cohesive force of the first region is less than the cohesive force of the second region. In some embodiments, the cohesive force of the first region is greater than or equal to 70 N/m and less than or equal to 125 N/m. In some embodiments, the cohesive force of the second region is greater than or equal to 138 N/m and less than or equal to 170 N/m.

Adjusting the cohesive force of the first region and the second region helps to improve the structural stability of the negative electrode film layer in different regions and improve the electrical contact between the particles of the negative electrode active material. At the same time, the cohesive force of the first region being less than the cohesive force of the second region can also improve the migration performance of the active ions in the first region, and make the negative electrode film layer as a whole have good conductivity and excellent kinetic performance.

The cohesive force of the first region and the second region affects the use performance of the secondary battery. This may be caused by the fact that during the preparation process of the negative electrode plate, the binder in a negative electrode slurry floats (or migrates) to the surface layer of the electrode plate film layer as the solvent evaporates during the drying process, resulting in excessive binder content in the first region and a decrease in pore structures, hindering electrolyte solution infiltration and ion transport, and compromising the fast charging performance of the first carbon-based material. The insufficient binder content in the second region reduces the adhesion (or cohesive force) between the particles of the second carbon-based material. With the expansion and contraction of the material volume caused by the intercalation and deintercalation of the active ions in the cyclic charging and discharging process, the binding strength between the particles of the second carbon-based material is further deteriorated, causing some of the particles of the second carbon-based material to detach or fall off in the later stage of the cycle, losing the electrical contact with surrounding materials, and leading to a rapid decline in battery cell capacity.

In some embodiments, the cohesive force of the first region is 70 N/m to 110 N/m. In some embodiments, the cohesive force of the first region is 80 N/m to 125 N/m, 80 N/m to 110 N/m, 73 N/m to 109 N/m, or 95 N/m to 115 N/m. In some embodiments, the cohesive force of the first region is 75 N/m, 85 N/m, 90 N/m, 96 N/m, 103 N/m, 105 N/m, 108 N/m, 110 N/m, 113 N/m, 114 N/m, 116 N/m, 117 N/m, 118 N/m, or within a numerical range between any two thereof, thus further improving the structural stability of the first region and the migration performance of the active ions.

In some embodiments, the cohesive force of the second region is 145 N/m to 170 N/m. In some embodiments, the cohesive force of the second region is 140 N/m to 170 N/m, 140 N/m to 165 N/m, 143 N/m to 170 N/m, or 140 N/m to 162 N/m. In some embodiments, the cohesive force of the second region is 141 N/m, 147 N/m, 150 N/m, 153 N/m, 155 N/m, 158 N/m, 162 N/m, 164 N/m, 168 N/m, 170 N/m, or within a numerical range between any two thereof. This helps to further improve the degree of overlap between the particles of the second carbon-based material and improve the conductivity of the negative electrode film layer; simultaneously maintain the structural stability of the second region, reduce the loss of electrical contact caused by the detachment of the particles of the second carbon-based material, and further improve the cycling performance of the secondary battery.

The cohesive force may be determined by using a method known in the art. Exemplarily, the following method may be used for determination:

A double-sided adhesive tape is applied to a steel plate. The negative electrode plate is cut into sample strips with a length of 20 cm and a width of 20 mm. A copper foil adhesive tape (width×length=20 mm×80 mm) for testing the cohesive force of the negative electrode plate is centrally applied to and covers the sample strips, white paper strips with width×length=20 mm× 60 mm are cut and inserted between the sample strips and the single-sided adhesive tape. The overlapped length is about 15 mm. The sample strips are rolled back and forth four times under a condition of 2 kg. The white paper strips are clamped on a fixture of a tensile tester (Sansi, Instron 3365). The tensile tester is turned on to slowly pull the white paper strips at a speed of 50 mm/min for a displacement of 60 mm. The cohesive force at this position is determined, in unit of N/m.

The first carbon-based material and the second carbon-based material have good powder characteristics. In some embodiments, the volume-based particle size Dv10 of the first carbon-based material is greater than or equal to 3.0 µm. In some embodiments, the volume-based particle size Dv10 of the first carbon-based material is greater than or equal to 4.0 µm. In some embodiments, the volume-based particle size Dv10 of the first carbon-based material is 3.0 µm to 7 µm, 4.0 µm to 7 µm, or 4.0 µm to 6.5 µm. In some embodiments, the volume-based particle size Dv10 of the first carbon-based material is 3.0 µm, 4.0 µm, 4.4 µm, 4.6 µm, 4.7 µm, 4.8 µm, 5.0 µm, 5.3 µm, 5.7 µm, 6.1 µm, 6.0 µm, 6.5 µm, 6.8 µm, or within a numerical range between any two thereof, thus reducing the side reactions of the first carbon-based material with a small particle size during cycling, reducing the irreversible consumption of the active ions, and improving the cycling performance of the secondary battery.

In some embodiments, the volume-based particle size Dv50 of the first carbon-based material is 5.5 µm to 18 µm. In some embodiments, the volume-based particle size Dv50 of the first carbon-based material is 7 µm to 18.0 µm. In some embodiments, the volume-based particle size Dv50 of the first carbon-based material is 5.5 µm to 13.5 µm In some embodiments, the volume-based particle size Dv50 of the first carbon-based material is 8.0 µm to 16.0 µm, 8.5 µm to 14.3 µm, 9.6 µm to 14.3 µm, 7.5 µm to 11.5 µm, 7.5 µm to 10.5 µm, 8.0 µm to 11.5 µm, or 8.5 µm to 11 µm. In some embodiments, the volume-based particle size Dv50 of the first carbon-based material is 5.5 µm, 6.0 µm, 7.0 µm, 7.8 µm, 8.3 µm, 8.8 µm, 9.0 µm, 9.2 µm, 9.6 µm, 9.8 µm, 10.0 µm, 10.3 µm, 10.7 µm, 11.2 µm, 12.2 µm, 12.9 µm, 13.1 µm, 13.7 µm, 14.3 µm, or within a numerical range between any two thereof. The volume-based particle size Dv50 may affect the specific surface area of the negative electrode active material, further affecting the number of active sites of the negative electrode active material that interact with the active ions. Adjusting the volume-based particle size Dv50 can help to obtain suitable active sites, reduce the side reactions caused by excessive active sites, and reduce the irreversible consumption of the active ions. It can also alleviate the suppression on the cycling performance of the secondary battery caused by insufficient active sites. Adjusting the volume-based particle size Dv50 of the first carbon-based material can help to improve the consumption and migration performance of the active ions in the first region, and enable the secondary battery to balance the cycling performance and fast charging performance.

In some embodiments, the volume-based particle size Dv90 of the first carbon-based material is less than or equal to 40 µm. In some embodiments, the volume-based particle size Dv90 of the first carbon-based material is less than or equal to 30 µm. In some embodiments, the volume-based particle size Dv90 of the first carbon-based material is 15 µm to 30.0 µm, 15 µm to 25 µm, 18 µm to 28.9 µm, or 16.9 µm to 28.9 µm In some embodiments, the volume-based particle size Dv90 of the first carbon-based material is 15.7 µm, 16.1 µm, 16.9 µm, 17.3 µm, 17.9 µm, 19.0 µm, 20.9 µm, 21.2 µm, 22.4 µm, 23.6 µm, 25.7 µm, 26.5 µm, 27.7 µm, 28.9 µm, 29.2 µm, or within a numerical range between any two thereof. During the cycling process, the particles with a large particle size (especially secondary particles) in the negative electrode active material undergo repeated expansion and contraction with the intercalation and deintercalation of the active ions, and bridges within the particles are more likely to break, leading to particle rupture and causing the particles of the negative electrode active material to lose electrical contact with each other. Adjusting the volume-based particle size Dv90 of the first carbon-based material can help to improve the conductivity of the first region in the negative electrode film layer, and thus improve the cycling performance of the secondary battery.

In some embodiments, the particle size distribution (Dv90-Dv10)/Dv50 of the first carbon-based material is 0.9 to 1.6, optionally 1.10 to 1.55, 1.1 to 1.45, 1.2 to 1.5, or 1.3 to 1.55. In some embodiments, the particle size distribution of the first carbon-based material is 1.05, 1.15, 1.2, 1.25, 1.30, 1.35, 1.40, 1.45, 1.55, or within a numerical range between any two thereof. The particle size distribution reflects the degree of dispersion of the particle size distribution of the first carbon-based material. Adjusting the particle size distribution of the first carbon-based material helps to control the content of the volume-based particle size Dv10 and volume-based particle size Dv90 in the first carbon-based material, and reduce their impact on the cycling performance of the secondary battery.

In some embodiments, the volume-based particle size Dv10 of the second carbon-based material is greater than or equal to 3.5 µm. In some embodiments, the volume-based particle size Dv10 of the second carbon-based material is greater than or equal to 4.0 µm. In some embodiments, the volume-based particle size Dv10 of the second carbon-based material is 3.5 µm to 7 µm, optionally 4.0 µm to 7 µm, 3.0 µm to 6.2 µm, or 4.6 µm to 6.2 µm. In some embodiments, the volume-based particle size Dv10 of the second carbon-based material is 3.5 µm, 4.0 µm, 4.5 µm, 4.6 µm, 4.8 µm, 5.3 µm, 6.2 µm, 6.7 µm, or within a numerical range between any two thereof. This reduces the irreversible consumption of the active ions in the second region and improve the cycling performance of the secondary battery.

In some embodiments, the volume-based particle size Dv50 of the second carbon-based material is 7.0 µm to 18.0 µm. In some embodiments, the volume-based particle size Dv50 of the second carbon-based material is 7.0 µm to 14.0 µm. In some embodiments, the volume-based particle size Dv50 of the second carbon-based material is 8.0 µm to 16.0 µm, 8.0 µm to 12.0 µm, 8.5 µm to 14.5 µm, 9.5 µm to 14.3 µm, 9.5 µm to 11.5 µm, 9.0 µm to 12.5 µm, or 9.6 µm to 14.3 µm. In some embodiments, the volume-based particle size Dv50 of the second carbon-based material is 7.5 µm, 8.8 µm, 9.2 µm, 9.7 µm, 10.0 µm, 10.3 µm, 10.5 µm, 10.7 µm, 10.9 µm, 11.2 µm, 11.8 µm, 12.0 µm, 12.2 µm, 13.5 µm, 14.1 µm, 17.6 µm, or within a numerical range between any two thereof. Adjusting the volume-based particle size Dv50 of the second carbon-based material can shorten the intercalation and deintercalation path of the active ions, help to improve the consumption and migration performance of the active ions in the second region, and enable the secondary battery to balance the cycling performance and the fast charging performance.

In some embodiments, the volume-based particle size Dv90 of the second carbon-based material is less than or equal to 40.0 µm. In some embodiments, the volume-based particle size Dv90 of the second carbon-based material is less than or equal to 28.0 µm. In some embodiments, the volume-based particle size Dv90 of the second carbon-based material is 15 µm to 30.0 µm, 13 µm to 20.0 µm, 16 µm to 30 µm, 18 µm to 28.9 µm, or 16.9 µm to 28.9 µm. In some embodiments, the volume-based particle size Dv90 of the second carbon-based material is 16.4 µm, 17.6 µm, 18.3 µm, 19.7 µm, 20.6 µm, 22.1 µm, 24.5 µm, 26.4 µm, 27.3 µm, 28.2 µm, 29.6 µm, or within a numerical range between any two thereof. This helps to improve the conductivity of the second region in the negative electrode film layer, and thus improve the cycling performance of the secondary battery.

In some embodiments, the particle size distribution of the second carbon-based material is 0.9 to 1.6. In some embodiments, the particle size distribution of the second carbon-based material is 0.9 to 1.5. In some embodiments, the particle size distribution of the second carbon-based material is 1.1 to 1.55, 1.1 to 1.4, 1.1 to 1.3, 1.0 to 1.6, 1.0 to 1.5, 1.1 to 1.5, or 1.3 to 1.55. In some embodiments, the particle size distribution of the second carbon-based material is 1.05, 1.15, 1.2, 1.25, 1.3, 1.35, 1.45, 1.55, or within a numerical range between any two thereof. Adjusting the particle size distribution of the second carbon-based material helps to control the content of the volume-based particle size Dv10 and volume-based particle size Dv90 in the second carbon-based material, and reduce their impact on the cycling performance of the secondary battery.

In the present disclosure, the volume-based particle sizes Dv10, Dv50, and Dv90 of the carbon-based negative electrode materials represent corresponding particle sizes when the cumulative volume distribution percentage of the material reaches 10%, 50%, and 90%, respectively, and may be determined by using instruments and methods known in the art. For example, a laser particle size analyzer may be adopted for determination with reference to GB/T 19077-2016. A testing instrument may be Mastersizer 3000 laser particle size analyzer from Malvern Instruments Limited (UK).

In the negative electrode plate, an increase in the gravimetric capacity of the negative electrode active material helps to improve the energy density and cycling performance of the secondary battery. However, a decrease in the interplanar spacing of the high-gravimetric-capacity negative electrode active material is not conducive to the deintercalation of the active ions, compromising the fast charging performance of the secondary battery. In the later stage of cycling, there is a high risk of accelerated degradation of the cycling performance due to insufficient kinetics. In order to balance the energy density, the fast charging performance, and the cycling performance of the secondary battery, in some embodiments, the gravimetric capacity of the first carbon-based material is less than or equal to the gravimetric capacity of the second carbon-based material. Herein, "gravimetric capacity" refers to the ratio of the electric capacity that can be released by the carbon-based negative electrode active material to the mass of the carbon material.

In some embodiments, the gravimetric capacity of the first carbon-based material is 310 mAh/g to 350 mAh/g. In some embodiments, the gravimetric capacity of the first carbon-based material is 315 mAh/g to 335 mAh/g. In some embodiments, the gravimetric capacity of the first carbon-based material is 310 mAh/g to 340 mAh/g, 310 mAh/g to 330 mAh/g, or 300 mAh/g to 340 mAh/g. In some embodiments, the gravimetric capacity of the first carbon-based material is 315 mAh/g, 320 mAh/g, 325 mAh/g, 330 mAh/g, 335 mAh/g, 345 mAh/g, or 350 mAh/g.

In some embodiments, the gravimetric capacity of the second carbon-based material is 310 mAh/g to 355 mAh/g. In some embodiments, the gravimetric capacity of the second carbon-based material is 310 mAh/g to 350 mAh/g. In some embodiments, the gravimetric capacity of the second carbon-based material is 345 mAh/g to 355 mAh/g. In some embodiments, the gravimetric capacity of the second carbon-based material is 340 mAh/g to 355 mAh/g, or 340 mAh/g to 350 mAh/g. In some embodiments, the gravimetric capacity of the second carbon-based material is 315 mAh/g, 319 mAh/g, 343 mAh/g, 348 mAh/g, 350 mAh/g, 355 mAh/g, 353 mAh/g, or within a numerical range between any two thereof. In this case, the interplanar spacing of the first carbon-based material is larger, and the powder compaction density of the first carbon-based material is less than or equal to the powder compaction density of the second carbon-based material, thus making the first region have more pore structures and high porosity than the second region, which can improve the transport performance of the active ions in the first region. At the same time, the second region has a higher energy density than the first region, which can improve the overall energy density of the negative electrode plate, enabling the negative electrode plate to balance the energy density and the fast charging performance.

The method for measuring the gravimetric capacity may be any method known in the art. For example, a graphite negative electrode active material sample may be thoroughly mixed with a conductive agent carbon black and polyvinylidene fluoride (PVDF) in a suitable amount of solvent NMP at a mass ratio of 91.6:1.8:6.6 to form a uniform negative electrode slurry. The negative electrode slurry is evenly coated onto the surface of the negative electrode current collector copper foil, and dried, and cold-pressed. Then a metal lithium plate is used as a counter electrode, a polypropylene (PP) film is used as a separator, and an electrolyte solution is filled. An electrolyte solution formula adopted is as follows: dimethyl carbonate (DMC), ethyl methyl carbonate (EMC), and ethylene carbonate (EC) are mixed at a weight ratio of 1:1:1 to obtain an organic solvent, and then LiPF₆ is dissolved in the organic solvent to prepare the electrolyte solution with a concentration of 1.0 mol/L. A CR2430 button battery is obtained by assembling in an argon-filled glove box. At 25°C, the prepared button battery is discharged at a constant current of 0.05C to 0.005 V first, then continuously discharged at a constant current of 10 µA to 0.005 V, and allowed to stand for 5 min. The first-cycle discharging capacity of the button battery is recorded. Then the button battery is charged at a constant current of 0.1C to 2.0 V, and the charging capacity of the button battery is recorded. A ratio of the charging capacity of the button battery to the mass of the graphite negative electrode active material sample is the gravimetric capacity of the graphite negative electrode active material.

In some embodiments, the first carbon-based material and the second carbon-based material both include artificial graphite.

In some embodiments, the first carbon-based material and the second carbon-based material are the same carbon-based material, and the first carbon-based material or the second carbon-based material satisfies at least one of the following conditions:
(1) the volume-based particle size Dv10 of the first carbon-based material or the second carbon-based material is greater than or equal to 4 µm, optionally 4 µm to 7 µm;
(2) the volume-based particle size Dv50 of the first carbon-based material or the second carbon-based material is 7 µm to 18 µm, optionally 8.0 µm to 16.0 µm;
(3) the volume-based particle size Dv90 of the first carbon-based material or the second carbon-based material is less than or equal to 40.0 µm, optionally 15 µm to 30.0 µm;
(4) the particle size distribution (Dv90-Dv10)/Dv50 of the first carbon-based material or the second carbon-based material is 0.9 to 1.6, optionally 1.10 to 1.55;
(5) the gravimetric capacity of the first carbon-based material or the second carbon-based material is 310 mAh/g to 350 mAh/g; and
(6) the first carbon-based material and the second carbon-based material both include artificial graphite.

A good volume-based particle size Dv50 helps to increase the specific surface area of the negative electrode active material, provide sufficient active sites, shorten the migration path of active ions, and improve the cycling performance and kinetic performance of the secondary battery. A suitable volume-based particle size Dv10 helps to reduce the side reactions of the negative electrode active material during cycling, mitigate the irreversible consumption of active ions caused by the side reactions, and improve the cycling performance of the secondary battery. A suitable volume-based particle size Dv90 can reduce the loss of the electrical contact of the negative electrode active material with a large particle size due to particle breakage during cycling, thus enabling the secondary battery to have good cycling performance and kinetic performance simultaneously. The gravimetric capacity of the first carbon-based material and the second carbon-based material being within the specified range helps with the transport of active ions in the first region, thus improving the kinetic performance of the secondary battery, helping to increase the overall energy density of the negative electrode plate, and simultaneously improving the cycling performance and kinetic performance of the secondary battery.

In some embodiments, the first carbon-based material and the second carbon-based material are different carbon-based materials, and the first carbon-based material satisfies at least one of the following conditions:
(1) the volume-based particle size Dv10 of the first carbon-based material is greater than or equal to 3 µm, optionally 3 µm to 7 µm;
(2) the volume-based particle size Dv50 of the first carbon-based material is 5.5 µm to 13.5 µm, optionally 7.5 µm to 11.5 µm;
(3) the volume-based particle size Dv90 of the first carbon-based material is less than or equal to 30 µm, optionally 15 µm to 25 µm;
(4) the particle size distribution (Dv90-Dv10)/Dv50 of the first carbon-based material is 0.9 to 1.6, optionally 1.10 to 1.55;
(5) the gravimetric capacity of the first carbon-based material is 315 mAh/g to 335 mAh/g; and
(6) the first carbon-based material includes artificial graphite;

the second carbon-based material satisfies at least one of the following conditions:
(1) the volume-based particle size Dv10 of the second carbon-based material is greater than or equal to 3.5 µm, optionally 3.5 µm to 7 µm;
(2) the volume-based particle size Dv50 of the second carbon-based material is 7.0 µm to 14.0 µm, optionally 8.0 µm to 12.0 µm;
(3) the volume-based particle size Dv90 of the second carbon-based material is less than or equal to 28 µm, optionally 13 µm to 20 µm;
(4) the particle size distribution (Dv90-Dv10)/Dv50 of the second carbon-based material is 0.9 to 1.5, optionally 1.1 to 1.3;
(5) the gravimetric capacity of the second carbon-based material is 345 mAh/g to 355 mAh/g; and
(6) the second carbon-based material includes artificial graphite.

The volume-based particle sizes Dv50, Dv10, and Dv90 of the first carbon-based material and the second carbon-based material being within the specified ranges helps to provide sufficient active sites for active ions and shorten the migration path of active ions, mitigate the irreversible consumption of the active ions caused by the side reactions, reduce the loss of the electrical contact of the negative electrode active material with a large particle size due to particle breakage during cycling, and enable the secondary battery to have good cycling performance and kinetic performance simultaneously. In addition, the gravimetric capacity of the first carbon-based material being within the specified range helps with the transport of active ions in the first region, thus improving the kinetic performance of the secondary battery. The gravimetric capacity of the second carbon-based material being within the specified range helps to improve the overall energy density of the negative electrode plate, and simultaneously improve the cycling performance and kinetic performance of the secondary battery.

In some embodiments, under the condition that the first carbon-based material and the second carbon-based material are different carbon-based materials, the volume-based particle size Dv50 of the first carbon-based material is less than the volume-based particle size Dv50 of the second carbon-based material. A small particle size helps to increase the pore structures in the film layer, making the porosity of the first region higher than the porosity of the second region. This reduces pore blockage in the pore structures in the first region, facilitates the migration of the active ions, and improves the kinetic performance of the secondary battery during long-term cycling.

In some embodiments, under the condition that the first carbon-based material and the second carbon-based material are different carbon-based materials. The gravimetric capacity of the first carbon-based material is less than or equal to the gravimetric capacity of the second carbon-based material. In this case, the powder compaction density of the first carbon-based material is less than or equal to the powder compaction density of the second carbon-based material. The first region has a higher porosity than the second region. At the same time, the second region has a higher energy density than the first region, thus helping to make the negative electrode plate to balance the energy density and the transport performance of the active ions.

In some embodiments, the first carbon-based material and/or the second carbon-based material may be prepared by using a method including the following steps: providing a raw material; treating the raw material to obtain a precursor; performing graphitization treatment and post-treatment on the precursor to obtain a graphite material.

In some embodiments, the raw material includes at least one of petroleum coke, needle coke, and pitch coke.

Herein, the term "petroleum coke" refers to coke formed by high-temperature carbonization of petroleum residue oil or petroleum pitch.

Herein, the term "needle coke" refers to needle-texture coke produced from coal tar pitch or petroleum pitch which undergoes liquid-phase carbonization to form an anisotropic intermediate phase, followed by processes such as high-temperature carbonization.

Herein, the term "pitch coke" refers to a solid material produced from coal tar pitch after high-temperature carbonization.

In some embodiments, the raw material is petroleum coke. The petroleum coke has excellent graphitization performance and low thermal expansion coefficient, thus helping to obtain a graphite material with excellent rate performance and cycling stability. In addition, the cost of the raw material is low and the cost is reduced.

In some embodiments, the raw material is needle coke. The needle coke has a series of advantages such as low thermal expansion coefficient, low porosity, low sulfur content, low ash content, low metal content, high conductivity, and easiness in graphitization. The graphite material obtained after graphitization treatment can achieve high ultimate compaction density and has low cycling expansion rate.

The above-mentioned raw material usually includes at least one of mosaic type, domain type, and fibrous type structures. Typically, based on the morphological characteristics and the size of isochromatic areas observed under polarized light microscopy, microstructures with isochromatic areas smaller than 30 µm are identified as mosaic-type; microstructures with isochromatic areas larger than 30 µm are identified as domain-type; and anisotropic, banded isochromatic areas are identified as fibrous type structures.

In some embodiments of the present disclosure, the raw material is petroleum coke. Based on the total volume of the raw material's structure, the combined volume proportion of mosaic type and domain type structures in the raw material is greater than or equal to 60%, optionally 60% to 80%, which helps to obtain a graphite material with a low oil absorption value. However, an excessively high percentage of mosaic type and domain type structures will adversely affect the gravimetric capacity of the graphite material, consequently affecting the energy density of the battery.

In some embodiments of the present disclosure, the raw material is needle coke. Based on the total volume of the raw material's structure, the volume proportion of the fibrous type structures in the raw material is greater than or equal to 40%, optionally 45% to 70%, which helps to improve the compaction density and the gravimetric capacity of the graphite material, making the graphite material retain a high degree of integrity in the compaction process, and enabling the battery to achieve good energy density while possessing a long cycle life. A raw material with a volume proportion of the fibrous type structures within the above range not only exhibits relatively low cost, but also contribute to a high gravimetric capacity of the graphite and provide the battery cell with a favorable kinetic window throughout its entire life cycle, thus comprehensively improving the long-term cycling performance and overall electrochemical performance of the battery.

In the present disclosure, the volume proportions of the mosaic type, domain type, and fibrous type structures in the raw material may be determined by adopting any method known in the art. As an example, the raw material may be sampled according to the provisions of GB 1997-89, the raw material crushed to 1 mm is uniformly mixed, a sample of 40 g to 50 g is obtained by sample division, and 4 g to 5 g of test sample of 0.07 mm to 1.0 mm fractions is obtained by adopting a square-hole sieve for preparation of polished sections. Powdered coke and lump coke polished sections are prepared according to the specifications of MT 116.1-86, with the diameter of the powdered coke polished sections being not less than 22 mm, and the volume occupied by the cement being not less than 1/3. The test sample is placed on a glass slide with adhesive clay, flattened, and then positioned on a stage for focusing. After calibrating the microscope, a polarizer and an analyzer are adjusted to be orthogonal. A stone-blue inspection board (1λ) is inserted to produce a first-order red interference color in the field of view. The step length of a mechanical stage is determined to ensure 400 or more effective measurement points are uniformly distributed, with a point spacing of 0.3 mm to 0.5 mm and a line spacing typically of 0.5 mm to 0.8 mm being recommended. Starting from one end of the test sample, the microstructure type under an intersection of crosshairs is identified. The volume proportions of the mosaic type, domain type, and fibrous type structures in the raw material are then calculated by dividing the number of effective measurement points of optical textures of the mosaic type, domain type, fibrous type structures by the total number of measurement points statistically collected.

In some embodiments, the raw material may also satisfy the following conditions: sulfur content ≤ 0.7%, ash content ≤ 0.50%, and 8% ≤ volatile content ≤ 15%.

In some embodiments, treating the raw material specifically includes: subjecting the raw material to crushing, shaping treatment, and classification treatment, and removing fine powder obtained after crushing to obtain a precursor.

The volume-based particle size Dv50 of the precursor is 8.0 µm to 16.0 µm; and/or, the (Dv90-Dv10)/Dv50 of the precursor is 1.10 to 1.70.

In some embodiments, the volume-based particle size Dv50 of the precursor is optionally 8.0 µm, 9.0 µm, 10.0 µm, 11.0 µm, 12.0 µm, 13.0 µm, 14.0 µm, 15.0 µm, 16.0 µm, or within a numerical range between any two thereof.

Controlling the Dv50 of the precursor within an appropriate range helps to control the Dv50 of the graphite material within a suitable range, shorten the intercalation and deintercalation path of the active ions, improve the transport performance of both active ions and electrons, improve the rate performance of the battery, reduce the side reactions involving the graphite material and the irreversible consumption of the active ions during cycling, and thus improve the cycling performance and storage performance of the secondary battery.

In some embodiments, the (Dv90-Dv10)/Dv50 of the precursor is optionally 1.10, 1.20, 1.30, 1.40, 1.50, 1.60, 1.70, or within a numerical range between any two thereof.

Controlling the (Dv90-Dv10)/Dv50 of the precursor within an appropriate range helps to control the (Dv90-Dv10)/Dv50 of the graphite material within an appropriate range and enable the negative electrode film layer to have suitable pore structures, reducing the resistance to ion transport in the liquid phase and improving the rate performance of the secondary battery. In addition, the graphite material can also exhibit good particle packing performance, helping to improve the compaction density of the negative electrode film layer, further improving the energy density of the secondary battery.

In some examples, in the step of performing crushing treatment on the raw material, a crusher, such as a jaw crusher, may be used to perform crushing treatment on the coke raw material. For example, the raw material may be crushed to a predetermined particle size first and then sieved with a mesh, such as 3-20 mesh screen.

In some examples, in the step of performing shaping treatment on the raw material, a shaper may be used to perform shaping treatment on the raw material after crushing. Shaping treatment can reduce the burr on the surface of the raw material after crushing.

In some examples, in the step of performing classification treatment on the raw material, an air classifier may be used to perform classification treatment on the raw material after shaping. Optionally, the induced draft frequency may be greater than or equal to 20 Hz, and the classification frequency may be greater than or equal to 35 Hz. Classification treatment can reduce the content of large particles and fine powder in the obtained precursor.

After the raw material is subjected to raw material crushing, shaping and classification treatment, a primary particle precursor is obtained.

In some examples, the primary particle precursor may be granulated to obtain a secondary particle precursor. A binding material may be added for granulation. The binding material may be any substance known in the art suitable for preparing the negative electrode active material, such as one or more of coal pitch, petroleum pitch, polymeric compound, and resin. Upon heating and melting, the binding material exhibits moderate viscosity and maintains good fluidity, which can reduce the agglomeration of raw material particles in subsequent preparation processes. This can in turn mitigates issues such as an increase in surface defects and active sites on the carbon-based negative electrode active material particles that would otherwise arise from the need for additional deagglomeration steps.

"Primary particles" typically refer to individual fine crystal grains. In some cases, even for non-crystal particles, if both original particles and agglomerated particles are present, the original particles may still be referred to as primary particles. Agglomerated particles formed by the agglomeration of multiple original particles or primary particles are referred to as "secondary particles".

In some embodiments, shaping and classification treatment may be performed on the prepared secondary particles. In some embodiments, the volume-based particle size Dv50 of the secondary particle precursor is 11 µm to 15 µm, optionally 12 µm to 15 µm, 11.5 µm to 15.5 µm, 12.5 µm to 15 µm, 11 µm to 14.5 µm, or 12 µm to 14 µm.

By adjusting the particle size of the secondary particle precursor within the above range, it helps to control the particle size of the secondary particles in the negative electrode active material and improve the kinetic performance and cycling performance of the secondary battery.

In some embodiments, carbonization treatment is included before the graphitization treatment. In some embodiments, the treatment temperature for the carbonization treatment is 950°C to 1,350°C. In some embodiments, the treatment temperature for the carbonization treatment is optionally 950°C, 1,000°C, 1,100°C, 1,200°C, 1,300°C, 1,350°C, or within a numerical range between any two thereof.

The carbonization treatment may be performed before the graphitization treatment, after the graphitization treatment, or both before and after the graphitization treatment.

Herein, the term "graphitization treatment" refers to a heat treatment process of carbon materials. Under high-temperature conditions, carbon materials undergo a transition from a two-dimensional carbon network structure to a three-dimensional ordered structure through the growth of "micro crystals".

In some embodiments, the maximum power for the graphitization treatment is 70% to 90% of the rated power of a device. In some embodiments, the maximum power for the graphitization treatment is 70%, 75%, 80%, 85%, or 90% of the rated power, or within a numerical range between any two thereof. It is understood that a graphitization treatment device refers to any apparatus capable of performing the graphitization treatment, including, but not limited to, Acheson furnace, box furnace, internal series connection furnace, continuous graphitization furnace, electrical calcination furnace, medium-frequency furnace, and tubular furnace. The rated power of graphitization treatment devices produced by different manufacturers may vary, which may be selected according to the actual situation.

In some embodiments, the graphitization treatment device is an internal series connection furnace. The rated power of the internal series connection furnace is 20,000 W to 32,000 W. The duration of the graphitization treatment is 10 h to 30 h, optionally 15 h to 25 h.

In some embodiments, the graphitization treatment device is an Acheson furnace. The rated power of the Acheson furnace is 28,000 W to 30,000 W. The duration of the graphitization treatment is 30 h to 50 h, optionally 40 h to 50 h.

The maximum power for the graphitization treatment adopted in the present disclosure is required to be lower than the rated power of the graphitization treatment device to achieve uniformity of the temperature field in the graphitization treatment process.

In some embodiments, the maximum power for the graphitization treatment is 21,000 W to 25,000 W. In some embodiments, the maximum power for the graphitization treatment is optionally 23,000 W, 23,500 W, 24,000 W, 24,500 W, 25,000 W, or within a numerical range between any two thereof.

Controlling the maximum power for the graphitization treatment can effectively control the degree of graphitization of the graphite material in the heat treatment process, enabling the graphite material to achieve an appropriate degree of graphitization, and helping to obtain a graphite material that has cycling stability and high gravimetric capacity simultaneously.

In some embodiments, the constant-power duration of the maximum power for the graphitization treatment is 10 h to 50 h.

In some embodiments, the constant-power duration of the maximum power for the graphitization treatment is 10 h, 15 h, 20 h, 45 h, 50 h, or within a numerical range between any two thereof.

An appropriate graphitization treatment duration prevents excessive rearrangement of the precursor, which would otherwise result in high specific surface area and deterioration of high-temperature performance of the graphite material after the graphitization treatment. Furthermore, it also can effectively improve the degree of graphitization of the graphite material, thus simultaneously improving the energy density and cycle life of the secondary battery.

In some embodiments, the graphitization device is a graphitization furnace. The temperature for the graphitization treatment is 2,500°C to 3,000°C. The constant-temperature treatment duration is 9 h to 50 h. In some embodiments, the graphitization furnace is operated at a temperature of 2,600°C to 3,000°C. The constant-temperature treatment duration is 10 h to 50 h.

In some embodiments, post-treatment is performed on a graphitized product after the graphitization treatment to obtain a graphite material. The post-treatment includes screening and demagnetization.

In some embodiments, fusion treatment and pitch coating treatment are performed on a graphitized product after the graphitization treatment to obtain a graphite material. In some embodiments, the frequency of the fusion treatment is 20 Hz to 40 Hz, and/or the duration of the fusion treatment is 5 min to 15 min.

Performing the fusion treatment on the graphitized product before the pitch coating treatment can achieve the purposes of spheroidization and edge rounding. On one hand, an intermediate obtained from fusion spheroidization exhibits a relatively regular structure, which can increase the powder compaction density of the intermediate. On the other hand, fine graphite particles obtained from edge rounding can fill the voids within the intermediate, further improving the powder compaction density of the intermediate. The fusion treatment can effectively compensate for the adverse effects of the pitch coating treatment on the powder compaction density of the material, help to obtain a negative electrode film layer with high compaction density, and help to obtain a graphite material with high energy density and excellent rate performance.

In some embodiments, the frequency of the fusion treatment is optionally 20 Hz, 25 Hz, 30 Hz, 35 Hz, 40 Hz, or within a numerical range between any two thereof.

The frequency of the fusion treatment affects the powder compaction density and specific surface area of the graphite material. The high frequency of the fusion treatment can improve the powder compaction density of the graphite material, and can also avoid damage to the treatment device caused by excessively high frequency of the fusion treatment. In addition, the high frequency of the fusion treatment can also improve the specific surface area of the graphite material and improve the rate performance of the material.

In some embodiments, the duration of the fusion treatment is 5 min to 15 min. In some embodiments, the duration of the fusion treatment is optionally 5 min, 6 min, 7 min, 8 min, 9 min, 10 min, 11 min, 12 min, 13 min, 14 min, 15 min, or within a numerical range between any two thereof.

In some embodiments, post-treatment may also be performed on a product after the pitch coating treatment.

In some embodiments, a graphite material may also be obtained by mixing a primary particle graphitized product and a secondary particle graphitized product at a predetermined ratio. In some embodiments, the primary particle graphitized product and the secondary particle graphitized product are mixed at a mass ratio of 1:1 to 6:4. In some embodiments, the obtained primary particle graphitized product and the secondary particle graphitized product are mixed at a mass ratio of 50:50, 54:46, or 60:40.

In some embodiments, post-treatment may also be performed after the primary particle graphitized product and the secondary particle graphitized product are mixed.

In the present disclosure, as shown in FIG. 1 to FIG. 3, the negative electrode film layer 102 further includes a middle region 1023 located between the first region 1022 of the negative electrode film layer and the second region 1021 of the negative electrode film layer and having a thickness of 0.4 H.

In some examples, the middle region includes the first carbon-based material and/or the second carbon-based material. For example, as shown in FIG. 3, the middle region 1023 may have the same composition as the first region 1022. Therefore, a distribution region of the first carbon-based material in a thickness direction of the negative electrode film layer 102 is within a thickness range from the first surface 102a to 0.7 H of the negative electrode film layer. Alternatively, as shown in FIG. 2, the middle region 1023 may have the same composition as the second region 1021. Therefore, a distribution region of the second carbon-based material in the thickness direction of the negative electrode film layer 102 is within a thickness range from the second surface 102b to 0.7 H of the negative electrode film layer. Alternatively, as shown in FIG. 1, the middle region 1023 includes both the first carbon-based material and the second carbon-based material. In this case, the middle region 1023 includes both a layer structure with the first carbon-based material and a layer structure with the second elastic carbon-based material, and the two layer structures may also have a layer interface.

In some embodiments, the compaction density of the negative electrode film layer is 1.30 g/cm³ to 1.60 g/cm³. For example, the compaction density of the negative electrode film layer may be 1.43 g/cm³, 1.45 g/cm³, 1.53 g/cm³, 1.50 g/cm³, 1.58 g/cm³, or within a numerical range between any two thereof.

In the present disclosure, the compaction density of the negative electrode film layer may be determined by adopting any method known in the art. As an example, a negative electrode plate test sample with an area of S is weighed by using an electronic balance, with the weight denoted as W1. The thickness T1 of the negative electrode plate is then determined by using a micrometer. Then, a film layer of the weighed electrode plate is wiped off. A negative electrode current collector is then weighed, with the weight denoted as W2. The thickness T2 of the negative electrode current collector is determined by using a micrometer. Then, the compaction density of the negative electrode film layer is PD=(W1-W2)/[(T1-T2)×S].

In some embodiments, the areal density of the negative electrode film layer is 7 mg/cm² to 15 mg/cm², 8 mg/cm² to 15 mg/cm², 9 mg/cm² to 15 mg/cm², or 7 mg/cm² to 13 mg/cm². In some embodiments, the areal density of the negative electrode film layer is 13.0 mg/cm², 12 mg/cm², 11 mg/cm², 10 mg/cm², 9 mg/cm², 8 mg/cm², 7 mg/cm², or within a numerical range between any two thereof. Adjusting the areal density of the negative electrode film layer helps to improve the energy density of the secondary battery and improves the cycling performance of the secondary battery.

In the present disclosure, the areal density of the negative electrode film layer may be determined by adopting any method known in the art. As an example, the negative electrode plate after cold pressing is taken and punched into small circular pieces with an area of S1, with its weight being determined and denoted as M1. Then, the negative electrode film layer of the negative electrode plate after weighing is wiped off, the negative electrode current collector is weighed, which is denoted as M0, and the areal density of the negative electrode film layer is equal to (weight M1 of negative electrode plate - weight M0 of negative electrode current collector)/S1.

Excessively high compaction density and/or areal density of the electrode plate are not conducive to the migration of the active ions in the negative electrode plate. Adjusting the compaction density and/or areal density of the negative electrode film layer can reduce the impact on the migration performance of the active ions and improve the energy density of the secondary battery.

As an example, the negative electrode current collector has two opposite surfaces in its own thickness direction, and the negative electrode film layer is arranged on either or both of the two opposite surfaces of the negative electrode current collector.

In some examples, the negative electrode film layer may further include another negative electrode active material in addition to the graphite material. In some examples, the other negative electrode active material may include, but not limited to, at least one of conventional natural graphite, other artificial graphite, soft carbon, hard carbon, a silicon-based material, a tin-based material, and lithium titanate. The silicon-based material may include one or more of elemental silicon, silicon oxide, a silicon-carbon composite, a silicon-nitrogen composite, and a silicon alloy material. The tin-based material may include one or more of elemental tin, tin oxide, and a tin alloy material.

In some embodiments, the negative electrode current collector may be a metal foil or a composite current collector. For example, as the metal foil, a copper foil may be used. The composite current collector may include a polymer material substrate layer and a metal layer formed on at least one surface of the polymer material substrate. The composite current collector may be formed by forming a metal material (copper, copper alloy, nickel, nickel alloy, titanium, titanium alloy, silver, silver alloy, or the like) on a polymer material substrate (for example, a substrate of polypropylene (PP), polyethylene terephthalate (PET), polybutylene terephthalate (PBT), polystyrene (PS), or polyethylene (PE)).

In some embodiments, the negative electrode film layer further optionally includes a conductive agent. The conductive agent may be at least one selected from the group consisting of superconducting carbon, acetylene black, carbon black, Ketjen black, carbon dot, carbon nanotube, graphene, and carbon nanofiber.

In some embodiments, the negative electrode film layer further optionally includes other adjuvants such as a thickener (for example, sodium carboxymethyl cellulose (CMC-Na)).

In some embodiments, the negative electrode plate may be prepared in the following manner: dispersing components for preparing the negative electrode plate, such as the negative electrode active material, the conductive agent, the binder, and any other component in a solvent (e.g., deionized water) to form a negative electrode slurry; and coating the negative electrode slurry on the negative electrode current collector, followed by drying, cold-pressing, and other processes, to obtain the negative electrode plate.

### [Positive electrode plate]

The positive electrode plate includes a positive electrode current collector and a positive electrode film layer arranged on at least one surface of the positive electrode current collector. The positive electrode film layer includes a positive electrode active material.

As an example, the positive electrode current collector has two opposite surfaces in its own thickness direction. The positive electrode film layer is arranged on either or both of the two opposite surfaces of the positive electrode current collector.

In some embodiments, the positive electrode current collector may be a metal foil or a composite current collector. For example, as the metal foil, an aluminum foil may be used. The composite current collector may include a polymer material substrate and a metal layer formed on at least one surface of the polymer material substrate layer. The composite current collector may be formed by forming a metal material (aluminum, aluminum alloy, nickel, nickel alloy, titanium, titanium alloy, silver, silver alloy, or the like) on a polymer material substrate (for example, a substrate of polypropylene (PP), polyethylene terephthalate (PET), polybutylene terephthalate (PBT), polystyrene (PS), or polyethylene (PE)).

In some embodiments, the positive electrode active material may be a positive electrode active material for batteries well-known in the art. As an example, the positive electrode active material may include at least one of the following materials: lithium-containing phosphate with an olivine structure, lithium transition metal oxide, and respective modified compounds thereof. However, the present disclosure is not limited to such materials, and may alternatively use another conventional material that may be used as a positive electrode active material for batteries. These positive electrode active materials may be used alone or two or more of these positive electrode active materials may be combined for use. Examples of the lithium transition metal oxide may include, but not limited to, at least one of lithium cobalt oxide (such as LiCoO₂), lithium nickel oxide (such as LiNiO₂), lithium manganese oxide (such as LiMnO₂ and LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (also known as NCM₃₃₃), LiNi_{0.5}Co_{0.2}Mn_{0.3}O₂ (also known as NCM₅₂₃), LiNi_{0.5}Co_{0.25}Mn_{0.25}O₂ (also known as NCM₂₁₁), LiNi_{0.6}Co_{0.2}Mn_{0.2}O₂ (also known as NCM₆₂₂), and LiNi_{0.8}Co_{0.1}Mn_{0.1}O₂ (also known as NCM₈₁₁)), lithium nickel cobalt aluminum oxide (such as LiNi_{0.85}Co_{0.15}Al_{0.05}O₂), and modified compounds thereof. Examples of the lithium-containing phosphate with the olivine structure may include, but not limited to, at least one of lithium iron phosphate (such as LiFePO₄ (also known as LFP)), a composite material of lithium iron phosphate and carbon, lithium manganese phosphate (such as LiMnPO₄), a composite material of lithium manganese phosphate and carbon, lithium iron manganese phosphate, and a composite material of lithium manganese iron phosphate and carbon.

In some embodiments, the positive electrode film layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin.

In some embodiments, the positive electrode film layer further optionally includes a conductive agent. As an example, the conductive agent may include at least one of superconducting carbon, acetylene black, carbon black, Ketjen black, carbon dot, carbon nanotube, graphene, and carbon nanofiber.

In some embodiments, the positive electrode plate may be prepared through the following method: dispersing the above components for preparing the positive electrode plate, for example, the positive electrode active material, the conductive agent, the binder, and any other components, in a solvent (for example, N-methylpyrrolidone) to form a positive electrode slurry; and coating the positive electrode slurry on a positive electrode current collector, followed by processes such as drying and cold pressing, to obtain the positive electrode plate.

### [Electrolyte]

The electrolyte plays a role in conducting ions between the positive electrode plate and the negative electrode plate. The type of the electrolyte is not specifically limited in the present disclosure, which may be selected according to the requirements. For example, the electrolyte may be liquid, gelled, or all solid.

In some embodiments, the electrolyte is an electrolyte solution. The electrolyte solution includes an electrolyte salt and a solvent.

In some embodiments, the electrolyte salt may be at least one selected from the group consisting of lithium hexafluorophosphate, lithium tetrafluoroborate, lithium perchlorate, lithium hexafluoroborate, lithium bis(fluorosulfonyl)imide, lithium bis-trifluoromethanesulfonimide, lithium trifluoromethanesulfonate, lithium difluorophosphate, lithium difluorooxalatoborate, lithium bisoxalatoborate, lithium difluorobisoxalate phosphate, and lithium tetrafluoro oxalate phosphate.

In some embodiments, the solvent may be at least one selected from the group consisting of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolyte solution further optionally includes an additive. For example, the additive may include a negative electrode film forming additive and a positive electrode film forming additive, and may further include an additive that can improve particular performance of the battery, for example, an additive that improves the overcharging performance of the battery, an additive that improves high or low temperature performance of the battery, or the like.

### [Separator]

In some embodiments, the secondary battery also includes a separator. The type of the separator is not particularly limited in the present disclosure, and any well-known porous separator with good chemical stability and mechanical stability may be selected.

In some embodiments, the material of the separator may be at least one selected from the group consisting of glass fiber, non-woven fabric, polyethylene, polypropylene, and polyvinylidene fluoride. The separator may be a single-layer film or a multilayer composite film, which is not specially limited. In a case that the separator is a multilayer composite film, materials of layers may be the same or different, which is not specially limited.

In some embodiments, the positive electrode plate, the negative electrode plate, and the separator may be made into an electrode assembly through a winding process or a lamination process.

In some embodiments, the secondary battery may include an outer package. The outer package may be used to encapsulate the above electrode assembly and electrolyte.

In some embodiments, the outer package of the secondary battery may be a hard case, such as a hard plastic case, an aluminum case, or a steel case. The outer package of the secondary battery may alternatively be a soft package, such as a pouch-type soft package. The material of the soft package may be plastic. Examples of plastic may include polypropylene, polybutylene terephthalate, polybutylene succinate, and the like.

In addition, the secondary battery, a battery module, a battery pack, and a power consuming apparatus of the present disclosure will be described below by appropriately referring to the drawings.

The shape of the secondary battery is not particularly limited in the present disclosure, and the secondary battery may be cylindrical, cuboidal, or in any other shape. For example, FIG. 4 shows a cuboidal secondary battery 5 as an example.

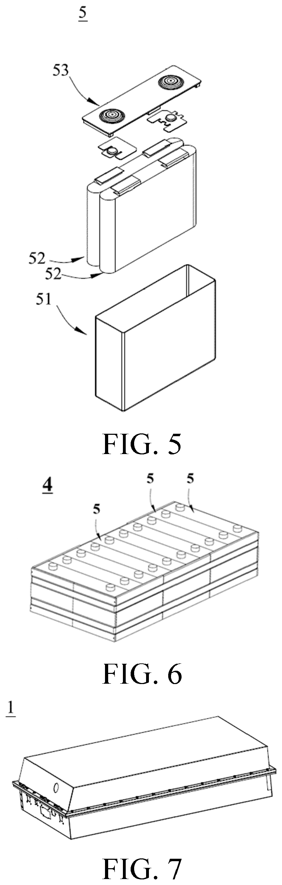

In some embodiments, referring to FIG. 5, the outer package may include a case 51 and a cover plate 53. The case 51 may include a bottom plate and side plates connected to the bottom plate. The bottom plate and the side plates form an accommodating cavity. The case 51 is provided with an opening in communication with the accommodating cavity. The cover plate 53 may cover the opening to close the accommodating cavity. The positive electrode plate, the negative electrode plate, and the separator may form an electrode assembly 52 through a winding process or a lamination process. The electrode assembly 52 is encapsulated in the accommodating cavity. The electrolyte solution infiltrates into the electrode assembly 52. The number of the electrode assemblies 52 included in the secondary battery 5 may be one or more, which may be selected by those skilled in the art according to the specific actual requirements.

In some embodiments, the secondary battery may be assembled into a battery module. The battery module may include one or more secondary batteries. The specific number may be selected by those skilled in the art according to the application and capacity of the battery module.

FIG. 6 shows a battery module 4 as an example. Referring to FIG. 6, in the battery module 4, multiple secondary batteries 5 may be sequentially arranged along a length direction of the battery module 4. Of course, they may also be arranged in any other manner. Further, the multiple secondary batteries 5 may be secured through fasteners.

Optionally, the battery module 4 may further include a shell with an accommodating space. The multiple secondary batteries 5 are accommodated in the accommodating space.

In some embodiments, the battery module may also be assembled into a battery pack. The number of the battery modules included in the battery pack may be one or more. The specific number may be selected by those skilled in the art according to the application and capacity of the battery pack.

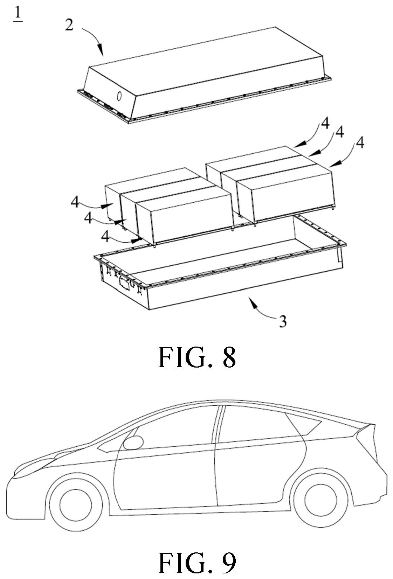

FIG. 7 and FIG. 8 show a battery pack 1 as an example. Referring to FIG. 7 and FIG. 8, the battery pack 1 may include a battery box and multiple battery modules 4 arranged in the battery box. The battery box includes an upper box 2 and a lower box 3. The upper box 2 can cover the lower box 3 to form a closed space for accommodating the battery modules 4. The multiple battery modules 4 may be arranged in the battery box in any way.

In addition, the present disclosure further provides a power consuming apparatus, which includes at least one of the secondary battery, the battery module, or the battery pack provided in the present disclosure. The secondary battery, the battery module, or the battery pack may be used as a power source of the power consuming apparatus, and may also be used as an energy storage unit of the power consuming apparatus. The power consuming apparatus may include, but not limited to, a mobile device (for example, a mobile phone or a notebook computer), an electric vehicle (for example, a pure electric vehicle, a hybrid electric vehicle, a plug-in hybrid electric vehicle, an electric bicycle, an electric scooter, an electric golf cart, or an electric truck), an electric train, a ship, a satellite, an energy storage system, and the like.

The secondary battery, the battery module, or the battery pack may be selected according to the use requirements of the power consuming apparatus.

FIG. 9 shows a power consuming apparatus as an example. The power consuming apparatus is a pure electric vehicle, a hybrid electric vehicle, or a plug-in hybrid electric vehicle. To meet the requirements of the power consuming apparatus for high power and high energy density of secondary batteries, a battery pack or a battery module may be adopted.

As another example, the apparatus may be a mobile phone, a tablet computer, a notebook computer, or the like. The apparatus is generally required to be light and thin, and may use a secondary battery as a power source.

### Examples

Examples of the present disclosure will be described below. The examples described below are exemplary and only intended to explain the present disclosure, and cannot be construed as limitations on the present disclosure. If the specific technologies or conditions are not specified in the examples, the technologies or conditions described in the literature in the art or the product manual shall be followed. The used reagents or instruments without manufacturers indicated are all conventional products that may be purchased in the market.

### I. Test methods

### 1. Test of particle sizes and particle size distribution of powder

Determination method: with reference to GB/T 19077-2016 (Particle Size Analysis - Laser Diffraction Method), determination was performed by using a laser particle size analyzer, such as Master Size 3000 laser particle size analyzer from Malvern Instruments Limited (UK), to obtain volume-based particle sizes Dv10, Dv50, and Dv90, and particle size distribution.

### 2. Test of gravimetric capacity of negative electrode active material

A graphite negative electrode active material sample was thoroughly mixed with a conductive agent carbon black and polyvinylidene fluoride (PVDF) in a suitable amount of solvent NMP at a mass ratio of 91.6:1.8:6.6 to form a uniform negative electrode slurry. The negative electrode slurry was evenly coated onto the surface of the negative electrode current collector copper foil, and dried, and cold-pressed. Then, a metal lithium plate was used as a counter electrode, a polypropylene (PP) film was used as a separator, and an electrolyte solution was filled. An electrolyte solution formula adopted was as follows: dimethyl carbonate (DMC), ethyl methyl carbonate (EMC), and ethylene carbonate (EC) were mixed at a weight ratio of 1:1:1 to obtain an organic solvent, and then LiPF₆ was dissolved in the organic solvent to prepare the electrolyte solution with a concentration of 1.0 mol/L. A CR2430 button battery was obtained by assembling in an argon-filled glove box. At 25°C, the prepared button battery was discharged at a constant current of 0.05C to 0.005 V first, then continuously discharged at a constant current of 10 µA to 0.005 V, and allowed to stand for 5 min. The first-cycle discharging capacity of the button battery was recorded. Then the button battery was charged at a constant current of 0.1C to 2.0 V, and the charging capacity of the button battery was recorded. A ratio of the charging capacity of the button battery to the mass of the graphite negative electrode active material sample was the gravimetric capacity of the graphite negative electrode active material.

### 3. Test of cycling performance of secondary battery

At 60°C, the batteries prepared in the examples and comparative examples were charged at a constant current of 1C to a voltage of 3.65 V, then charged at a constant voltage of 3.65 V until the current was ≤ 0.05C, and then discharged at a constant current of 1C to a voltage of 2.5 V, thus completing a charging and discharging cycle. The discharging capacity of the first cycle was recorded as C1. The charging and discharging cycle was repeated until the battery capacity faded to 80% of the initial capacity C1. The test was then stopped. The number of cycles completed was recorded.

### 4. Test of kinetic performance of secondary battery

At 25°C, the secondary battery was charged at a constant current of 0.33C to 3.65 V, then charged at a constant voltage to a current of 0.05C, allowed to stand for 5 min, and then discharged at a constant current of 0.33C to 2.50 V. Its actual capacity was recorded as C0.

Then, the secondary battery was charged at constant currents of 1.0 C0, 1.3 C0, 1.5 C0, 1.8 C0, 2.0 C0, 2.3 C0, 2.5 C0, 3.0 C0 sequentially to either 3.5 V or a negative electrode cutoff potential of 0 V (whichever was reached first). After each charging step, the secondary battery was discharged at 1 C0 to 2.5 V. Negative electrode potentials corresponding to 10%, 20%, 30%, ..., and 80% SOC (State of Charge) at different charging rates were recorded. Charging rate-negative electrode potential curves for different SOC states were plotted. Linear fitting was then performed to determine charging rates corresponding to the negative electrode potential being 0 V at different SOC states. The charging rates were defined as the charging windows for the corresponding SOC states and were respectively denoted as C10% SOC, C20% SOC, C30% SOC, C40% SOC, C50% SOC, C60% SOC, C70% SOC, and C80% SOC. The charging time T (in min) required to charge the secondary battery from 10% SOC to 80% SOC (under the premise that no lithium plating occurred on the secondary battery) was calculated according to the following formula: (60/C10% SOC + 60/C20% SOC + 60/C30% SOC + 60/C40% SOC + 60/C50% SOC + 60/C60% SOC + 60/C70% SOC + 60/C80% SOC)×10%. The shorter the charging time T, the better the fast charging performance of the secondary battery.

### II. Preparation methods of negative electrode active materials

### Preparation Example 1

A negative electrode active material H1 was prepared through a method including the following steps:
Petroleum coke with a combined content of mosaic type and domain type structures of 66% was coarsely crushed. The coarsely crushed material was then further crushed and screened. The screened material was shaped and classified. During the classification, fine powder (powder with a volume-based particle size Dv50 of 3 µm to 7 µm) accounting for 26% of the total mass of the raw petroleum coke was removed. The classification was performed at a frequency of 35 Hz to 45 Hz. A precursor with a volume-based particle size Dv50 of 15.2 µm and a particle size distribution (Dv90-Dv10)/Dv50 of 1.44 was obtained.

The precursor was then subjected to graphitization treatment in an Acheson furnace. The maximum power for the graphitization treatment was 21,000 W. After constant-power treatment for 48 h at the maximum power, the temperature at a furnace outlet of the Acheson furnace was decreased to 300°C to obtain an intermediate product. The intermediate product was subjected to screening and demagnetization to obtain a graphite negative electrode active material.

### Preparation Example 2

The preparation process of a negative electrode active material H2 was similar to that described in Preparation Example 1, except that the raw material used was needle coke with a fibrous type structure content of 44%, the volume-based particle size Dv50 of the precursor was 9.6 µm, and the particle size distribution (Dv90-Dv10)/Dv50 was 1.31; and then the precursor was placed in the furnace for pre-carbonization treatment, and the temperature was increased to 950°C at a heating rate of 5°C/min and held for 20 h during pre-carbonization treatment.

The precursor was then subjected to graphitization treatment by using a continuous graphitization furnace at a graphitization treatment temperature of 2,600°C. After constant-temperature treatment for 10 h, the material temperature was decreased to 300°C to obtain a graphitized product.

The graphitized product was screened and demagnetized, then fed into a highspeed fusion machine for fusion treatment to obtain an intermediate. The fusion treatment was performed at a frequency of 40 Hz for 10 min. The intermediate and pitch were mixed at a mass ratio of 98%:2%. After uniform mixing, carbonization treatment was performed at 1,150°C for 2 h. A demagnetization process was performed to obtain the graphite material H2.

### Preparation Example 3

The preparation process of a negative electrode active material H3 was similar to that described in Preparation Example 1. A needle coke raw material with a fibrous type structure content of 63% was subjected to crushing and classification treatment. The crushed material was then further shaped by using a shaping machine to remove fine powder to obtain a first precursor. The volume-based particle size Dv50 of the first precursor was 8.9 µm, the particle size distribution (Dv90-Dv10)/Dv50 was 1.33, and the tap density of the first precursor was 0.64 g/cm³.

The first precursor was granulated and restructured in a reaction kettle to obtain a second precursor with a volume-based particle size Dv50 of 14.0 µm.

The first precursor and the second precursor were respectively placed in a furnace for carbonization treatment at a temperature of 1,100°C, with residence time in a high-temperature zone of 24 h, to obtain a first intermediate product and a second intermediate product. The tap density of the first intermediate product was 0.95 g/cm³, and the tap density of the second intermediate product was 0.90 g/cm³.

The first intermediate product and the second intermediate product were respectively subjected to graphitization treatment at a temperature of 2,800°C in a graphitization treatment device which was an internal series connection furnace with a rated power of 28,000 W. The maximum power for the graphitization treatment was 21,500 W. The constant-power duration for maintaining the maximum power was 28 h. Primary particles and secondary particles were respectively obtained.

The primary particles and the secondary particles were uniformly mixed at a mass ratio of 50:50. The mixture was then screened through a 325-mesh screen to obtain the final product graphite material H3.

The powder characteristics and gravimetric capacity of the negative electrode active materials are as shown in Table 1 below.

**Table 1**

| Negative electrode active material | Dv10 (µm) | Dv50 (µm) | Dv90 (µm) | Particle size distribution | gravimetric capacity (mAh/g) |
|---|---|---|---|---|---|
| H1 | 6.2 | 14.3 | 28.9 | 1.55 | 344.4 |
| H2 | 4.8 | 9.6 | 19.0 | 1.44 | 319.4 |
| H3 | 4.6 | 10.7 | 16.9 | 1.30 | 351.4 |

### III. Preparation methods of secondary batteries

### Example 1

### 1) Preparation of negative electrode plate

The material H1, a conductive agent carbon black (Super P), a thickener sodium carboxymethyl cellulose, and a binder styrene-butadiene rubber were thoroughly mixed at a weight ratio of 97.0:1:1.2:0.8 in an appropriate amount of solvent deionized water and thoroughly stirred to form a first slurry. The material H1, a conductive agent carbon black (Super P), a thickener sodium carboxymethyl cellulose, and a binder styrene-butadiene rubber were thoroughly mixed at a weight ratio of 95.5:1:1.2:2.3 in an appropriate amount of solvent deionized water to form a second slurry. The second slurry was coated onto a negative electrode current collector copper foil. After a drying step, the first slurry was coated onto an electrode plate with a second carbon-based material by using a coating device again. Cold pressing and cutting were performed to obtain a negative electrode plate. After drying, the first slurry formed a first region, and the second slurry formed a second region. The coating weight of the first slurry was the same as that of the second slurry. The compaction density of the negative electrode film layer was 1.50 g/cm³, and the areal density was 9.49 mg/cm².

### 2) Preparation of positive electrode plate

A positive electrode active material lithium iron phosphate (LFP), a conductive agent Super P, and a binder PVDF were mixed at a mass ratio of 97:1:2. A solvent N-methyl-2-pyrrolidone was added. The mixture was stirred under vacuum in a mixer until a homogeneous state was achieved to obtain a positive electrode slurry. The positive electrode slurry was uniformly coated onto a positive electrode current collector aluminum foil. Drying, cold pressing, and cutting were performed to obtain a positive electrode plate. The compaction density of the positive electrode plate was 2.5 g/cm³, and the areal density was 19.48 mg/cm².

### 3) Preparation of electrolyte solution

Within an argon atmosphere glove box with a water content of < 10 ppm, diethyl carbonate (DEC), ethyl methyl carbonate (EMC), and ethylene carbonate (EC) were mixed at a weight ratio of 1:1:1 to obtain an organic solvent. LiPF₆ was then dissolved in the organic solvent to prepare an electrolyte solution with a concentration of 1.0 mol/L. Finally, vinylene carbonate (VC) was added. The content of VC was 2% of the total mass of the electrolyte solution.

### 4) Separator

A polypropylene film was selected as a separator.

### 5) Preparation of secondary battery

The positive electrode plate, the separator, and the negative electrode plate were stacked in sequence. The separator was located between the positive electrode plate and the negative electrode plate to serve an isolating function. Then, winding was performed to obtain an electrode assembly. The electrode assembly was placed in an outer package. After drying, the electrolyte solution was filled. Processes such as vacuum encapsulation, standing, formation, and shaping were performed to obtain a lithium-ion battery.

### Examples 2 to 7 and Comparative Examples 1 to 2

The preparation methods of the secondary batteries in Examples 2 to 7 and Comparative Examples 1 to 2 were similar to that in Example 1, but the type of the negative electrode active material and the mass content of the binder were adjusted. The mass content of the binder was adjusted by adjusting the amount of the negative electrode active material, as shown in Table 2-1.

**Table 2-1**

| No. | First region | | Second region | |
|---|---|---|---|---|
| | Material | Binder content (wt%) | Material | Binder content (wt%) |
| Example 1 | H1 | 0.8 | H1 | 2.3 |
| Example 2 | H1 | 0.4 | H1 | 2.7 |
| Example 3 | H2 | 0.8 | H2 | 2.3 |
| Example 4 | H3 | 0.8 | H3 | 2.3 |
| Example 5 | H2 | 0.8 | H3 | 2.3 |
| Example 6 | H2 | 0.6 | H3 | 2.5 |
| Example 7 | H2 | 0.4 | H3 | 2.7 |
| Comparative Example 1 | H1 | 1.5 | H1 | 1.5 |
| Comparative Example 2 | H2 | 1.5 | H3 | 1.5 |

The binder content and performance of the secondary batteries in Examples 1 to 7 and Comparative Examples 1 to 2 were tested by using the above testing methods. The results are as shown in Table 2-2 below:

**Table 2-2**

| No. | First region | | Second region | | Secondary battery | |
|---|---|---|---|---|---|---|
| | Binder (wt%) | Cohesive force (N/m) | Binder (wt%) | Cohesive force (N/m) | Number of cycles | Charging time (min) |
| Example 1 | 1.32 | 87.4 | 1.81 | 146.2 | 2063 | 33.06 |
| Example 2 | 0.81 | 70.4 | 2.32 | 168.2 | 1756 | 31.55 |
| Example 3 | 1.35 | 109.3 | 1.78 | 160.3 | 2563 | 17.87 |
| Example 4 | 1.37 | 95.5 | 1.79 | 153.7 | 1997 | 26.77 |
| Example 5 | 1.28 | 92.2 | 1.85 | 146.8 | 2211 | 24.88 |
| Example 6 | 1.04 | 83.1 | 2.11 | 159.8 | 1989 | 22.93 |
| Example 7 | 0.78 | 73.2 | 2.35 | 166.5 | 1835 | 21.75 |
| Comparative Example 1 | 1.73 | 137.5 | 1.34 | 114.2 | 1595 | 35.73 |
| Comparative Example 2 | 1.70 | 148.2 | 1.38 | 130.2 | 1490 | 26.11 |

### Comparative Examples 3 to 5

The preparation method in Comparative Example 3 was similar to that in Example 1, but the coating method was adjusted.

### 1) Preparation of negative electrode plate

The material H1, a conductive agent carbon black (Super P), a thickener sodium carboxymethyl cellulose, and a binder styrene-butadiene rubber were thoroughly mixed at a weight ratio of 96.3:1:1.2:1.5 in an appropriate amount of solvent deionized water to form a negative electrode slurry. The negative electrode slurry was coated onto a negative electrode current collector copper foil. Drying, cold pressing, and cutting were performed to obtain a negative electrode plate. The compaction density of the negative electrode film layer was 1.50 g/cm³, and the areal density was 9.48 mg/cm².

The preparation methods in Comparative Examples 4 to 5 were similar to that in Comparative Example 3, but the type of the negative electrode active material was adjusted. The specific preparation parameters, the mass contents of the binders in the electrode plates, and the performance test results of the secondary batteries are as shown in Table 3.

**Table 3**

| No. | Material | Binder content (wt%) | Binder in first region (wt) | Binder in second region (wt) | Number of cycles | Charging time (min) |
|---|---|---|---|---|---|---|
| Comparative Example 3 | H1 | 1.50 | 1.85 | 1.13 | 1644 | 35.45 |
| Comparative Example 4 | H2 | 1.50 | 1.78 | 1.20 | 1899 | 19.58 |
| Comparative Example 5 | H3 | 1.50 | 1.74 | 1.22 | 1433 | 28.15 |

In a case that the negative electrode active material and the electrode plate design are the same, the cohesive force of the electrode plate is related to the type and content of the binder in the negative electrode film layer. In a case that the type of the binder is the same, the higher the binder content between the particles, the greater the binding strength, i.e., the cohesive force, between the particles.

As evidenced by Examples 1 to 4 and Comparative Example 1, in a case that the same negative electrode active material is used in both the first region and the second region, in the prepared negative electrode plates, the binder content in the first region is lower than the binder content in the second region, the cohesive force of the first region is less than the cohesive force of the second region, and the prepared secondary batteries have good cycling performance and fast charging performance simultaneously.

As evidenced by Examples 5 to 7 and Comparative Example 2, in a case that the volume-based particle size Dv50 of the negative electrode active material in the first region is less than the volume-based particle size Dv50 of the negative electrode active material in the second region, in the prepared negative electrode plates, the binder content in the first region is lower than the binder content in the second region, the binder content in the first region is lower than the binder content in the second region, the cohesive force of the first region is less than the cohesive force of the second region, and the prepared secondary batteries also have good cycling performance and fast charging performance simultaneously.

As evidenced by Examples 1 to 7 and Comparative Examples 1 to 2, in a case that the mass content of the binder in the first region ranges from 0.78% to 1.37% and the mass content of the binder in the second region ranges from 1.79% to 2.35%, the secondary batteries can have good cycling performance and fast charging performance simultaneously.

As evidenced by Example 1 and Comparative Example 3, Example 3 and Comparative Example 4, and Example 4 and Comparative Example 5, the secondary batteries prepared without using secondary coating process for the negative electrode film layer cannot have good cycling performance and fast charging performance simultaneously. This indicates that in the drying process of the electrode plate, the binder migrates towards the first region of the film layer as the solvent evaporates, such that the binder content in the first region is higher than the binder content in the second region, thus affecting the migration of the lithium ions in the negative electrode film layer, and consequently affecting the cycling performance and fast charging performance of the secondary battery.

It needs to be noted that the present disclosure is not limited to the embodiments above. The above described embodiments are merely exemplary, and embodiments having substantially the same technical idea and the same effects within the scope of the technical solution of the present disclosure are all included in the technical scope of the present disclosure. In addition, other embodiments constructed by applying various modifications conceivable to those skilled in the art to the embodiments and combining some of the constituent elements of the embodiments without departing from the scope of the essence of the present disclosure are also included in the scope of the present disclosure.

## Claims

1. A secondary battery, comprising a negative electrode plate, wherein the negative electrode plate comprises a negative electrode current collector and a negative electrode film layer formed on at least one surface of the negative electrode current collector, the negative electrode film layer has a first surface distant from the negative electrode current collector and a second surface arranged opposite to the first surface, the thickness of the negative electrode film layer is denoted as H, a region within a thickness range from the first surface to 0.3 H of the negative electrode film layer is denoted as a first region of the negative electrode film layer, a region within a thickness range from the second surface to 0.3 H of the negative electrode film layer is denoted as a second region of the negative electrode film layer, and the binder content in the first region is less than the binder content in the second region.

2. The secondary battery according to claim 1, wherein the first region comprises a first binder, and the mass content of the first binder in the first region is 0.78% to 2.0%, optionally 0.78% to 1.4%.

3. The secondary battery according to claim 1 or 2, wherein the second region comprises a second binder, and the mass content of the second binder in the second region is 1.0% to 3.0%, optionally 1.79% to 2.32%.

4. The secondary battery according to any one of claims 1 to 3, wherein the cohesive force of the first region is greater than or equal to 70 N/m and less than or equal to 125 N/m, optionally 70 N/m to 110 N/m.

5. The secondary battery according to any one of claims 1 to 3, wherein the cohesive force of the second region is greater than or equal to 138 N/m and less than or equal to 170 N/m, optionally 145 N/m to 170 N/m.

6. The secondary battery according to any one of claims 1 to 5, wherein the first region comprises a first carbon-based material, the second region comprises a second carbon-based material, and the first carbon-based material and the second carbon-based material are the same carbon-based material.

7. The secondary battery according to claim 6, wherein the first carbon-based material or the second carbon-based material satisfies at least one of the following conditions:
(1) the volume-based particle size Dv10 of the first carbon-based material or the second carbon-based material is greater than or equal to 4 µm, optionally 4 µm to 7 µm;
(2) the volume-based particle size Dv50 of the first carbon-based material or the second carbon-based material is 7 µm to 18 µm, optionally 8.0 µm to 16.0 µm;
(3) the volume-based particle size Dv90 of the first carbon-based material or the second carbon-based material is less than or equal to 40.0 µm, optionally 15 µm to 30.0 µm;
(4) the particle size distribution (Dv90-Dv10)/Dv50 of the first carbon-based material or the second carbon-based material is 0.9 to 1.6, optionally 1.10 to 1.55;
(5) the gravimetric capacity of the first carbon-based material or the second carbon-based material is 310 mAh/g to 350 mAh/g; and
(6) the first carbon-based material and the second carbon-based material both include artificial graphite.

8. The secondary battery according to any one of claims 1 to 5, wherein the first region comprises a first carbon-based material, the second region comprises a second carbon-based material, and the first carbon-based material and the second carbon-based material are different carbon-based materials.

9. The secondary battery according to claim 8, wherein the first carbon-based material satisfies at least one of the following conditions:
(1) the volume-based particle size Dv10 of the first carbon-based material is greater than or equal to 3 µm, optionally 3 µm to 7 µm;
(2) the volume-based particle size Dv50 of the first carbon-based material is 5.5 µm to 13.5 µm, optionally 7.5 µm to 11.5 µm;
(3) the volume-based particle size Dv90 of the first carbon-based material is less than or equal to 30 µm, optionally 15 µm to 25 µm;
(4) the particle size distribution (Dv90-Dv10)/Dv50 of the first carbon-based material is 0.9 to 1.6, optionally 1.10 to 1.55;
(5) the gravimetric capacity of the first carbon-based material is 315 mAh/g to 335 mAh/g; and
(6) the first carbon-based material comprises artificial graphite.

10. The secondary battery according to claim 8 or 9, wherein the second carbon-based material satisfies at least one of the following conditions:
(1) the volume-based particle size Dv10 of the second carbon-based material is greater than or equal to 3.5 µm, optionally 3.5 µm to 7 µm;
(2) the volume-based particle size Dv50 of the second carbon-based material is 7.0 µm to 14.0 µm, optionally 8.0 µm to 12.0 µm;
(3) the volume-based particle size Dv90 of the second carbon-based material is less than or equal to 28 µm, optionally 13 µm to 20 µm;
(4) the particle size distribution (Dv90-Dv10)/Dv50 of the second carbon-based material is 0.9 to 1.5, optionally 1.1 to 1.3;
(5) the gravimetric capacity of the second carbon-based material is 345 mAh/g to 355 mAh/g; and
(6) the second carbon-based material includes artificial graphite.

11. The secondary battery according to any one of claims 8 to 10, wherein the volume-based particle size Dv50 of the first carbon-based material is less than the volume-based particle size Dv50 of the second carbon-based material.

12. The secondary battery according to any one of claims 8 to 11, wherein the gravimetric capacity of the first carbon-based material is less than the gravimetric capacity of the second carbon-based material.

13. The secondary battery according to any one of claims 1 to 12, wherein the first binder and the second binder each independently comprise at least one of styrene-butadiene rubber, polyacrylic acid, sodium polyacrylate, polyacrylamide, polyvinyl alcohol, sodium alginate, polymethacrylic acid, and carboxymethyl chitosan.

14. The secondary battery according to any one of claims 1 to 13, wherein
the compaction density of the negative electrode film layer is 1.30 g/cm³ to 1.60 g/cm³; and/or
the areal density of the negative electrode film layer is 7 mg/cm2 to 15 mg/cm2.

15. A power consuming apparatus, comprising the secondary battery according to any one of claims 1 to 14.
